# EUROPEAN PATENT SPECIFICATION

(11) **EP 2 793 308 B1**
(45) Date of publication and mention of the grant of the patent: **06.04.2016**
(21) Application number: 13186794.7
(22) Date of filing: 01.10.2013
(51) Int. Cl.: H01M 10/42, H01M 10/44, H02J 7/00, H01M 10/48

(54) **BATTERY MODULE AND CONTROL METHOD THEREOF**
BATTERIEMODUL UND STEUERVERFAHREN DAFÜR
MODULE DE BATTERIE ET SON PROCÉDÉ DE COMMANDE

(30) Priority: 19.04.2013 KR 20130043529
(43) Date of publication of application: 22.10.2014
(73) Proprietor: Samsung SDI Co., Ltd., Gyeonggi-do 449-577 (KR)
(72) Inventor: Yang, Hakcheol, Yongin-si, Gyeonggi-do (KR)
(74) Representative: Gulde & Partner

(56) References cited:
- EP-A2- 2 482 367
- DE-A1-102010 054 211
- JP-A- 2008 211 900
- US-A1- 2002 070 608
- US-A1- 2005 269 981
- US-A1- 2010 127 663
- US-A1- 2010 264 878
- US-A1- 2011 128 662

## Description

### BACKGROUND

### 1. Field

The following description relates to a battery module and a control method thereof.

### 2. Description of the Related Art

Vehicles using a gasoline or heavy oil internal combustion engine have caused serious air pollution. Accordingly, various attempts to develop electric or hybrid vehicles have recently been made to reduce air pollution. An electric vehicle uses a battery engine run by electrical energy outputted by a battery. Because the electric vehicle mainly uses a battery formed by one battery pack including a plurality of rechargeable/dischargeable secondary cells, there is merit in that it produces no emission gases and less noise. In addition, the term "hybrid vehicle" refers to an intermediate-stage vehicle using gasoline to power an internal combustion engine and an electric battery to power an electric motor.

Because battery performance directly affects a vehicle using electrical energy, it is desirable that each battery cell have superior performance. Also, it is desirable to provide a battery management system for measuring voltage and current of the overall battery so as to efficiently manage charging/discharging operations of each battery cell.

The battery management system includes a plurality of relays to supply battery power to a motor, to supply generator power to a battery, or to interrupt power supply in a dangerous situation. The relays are subjected to more severe stresses when they are turned off (opened) in a current flowing situation than in a current non-flowing situation. In particular, when a plurality of relays are sequentially turned off in the current flowing situation, the first relay that is turned off is subjected to the most severe stress. In addition, when the order of the plurality of relays turned off by the battery management system is fixed, the stress may concentrate on the first turned off relay, thereby lowering a lifetime of the battery pack. US 2011/128662 A1 and DE 10 2010 054211 A1 disclose such systems.

### SUMMARY

Aspects of embodiments of the present invention are directed toward a battery module and a control method thereof, which can increase a lifetime of a main relay by periodically changing the turn-off order of the main relay electrically coupled between the battery pack and a load, or controlling the turn-off order according to stress variables.

According to an aspect of embodiments of the present invention, there is provided a battery module including: a battery pack including positive and negative electrodes; a first main relay and a second main relay electrically coupled to the positive and negative electrodes of the battery pack; and a master battery management system electrically coupled to the first main relay and the second main relay and configured to control the first main relay and the second main relay to be driven, wherein the master battery management system includes a memory configured to store stress variables of the first main relay and the second main relay, the master battery management system is configured to control a turn-off order of the first main relay and the second main relay according to the stored stress variables of the first main relay and the second main relay, and the master battery management system is configured to selectively turn off the first main relay and the second main relay, wherein the main relay having a smaller stress variable is first turned off and the other main relay is then turned off.

The master battery management system may be configured to obtain from the memory, and cumulatively increase, the stress variable of the first turned-off main relay.

The battery module may further include a sub relay electrically coupled to the first main relay in parallel.

The battery module may further include a resistor electrically coupled to the sub relay in series.

The master battery management system includes a current sensor configured to sense an input current or an output current of the battery pack.

According to an aspect of the embodiments of the present invention, there is provided a control method of a battery module including a battery pack, a master battery management system electrically coupled to a first main relay and a second main relay and configured to control the first main relay and the second main relay to be driven, the master battery management system including a memory configured to store stress variables of the first main relay and the second main relay, the method including: determining, via the master battery management system, when the battery pack is abnormally charged and/or discharged; when the master battery management system determines that the battery pack is abnormally charged and/or discharged: receiving stress variables of the first main relay and the second main relay stored in the memory from the master battery management system and comparing the received stress variables; and controlling the relays, via the master battery management system, to sequentially turn off the first main relay and the second main relay according to magnitudes of the stress variables of the first main relay and the second main relay.

Controlling of the relays may include first turning off one of the main relays from the first main relay and second main relay having a smaller stress variable and then turning off the other main relay.

The control method may further include obtaining and cumulatively increasing the stress variables of the main relay first turned off by the master battery management system and storing the stress variables.

Each of the stress variables corresponding to one of the first main relay and the second main relay may be a stress value relative to a number of times the corresponding one of the first main relay and the second main relay is capable of being turned off.

According to an aspect of the embodiments of the present invention, there is provided a battery module including: a one battery pack including positive and negative electrodes; a first main relay and a second main relay electrically coupled to the positive and negative electrodes of the battery pack; and a master battery management system electrically coupled to the first main relay and the second main relay and configured to control the first main relay and the second main relay to be driven, wherein the master battery management system is configured to alternately or periodically change a turn-off order of the first main relay and the second main relay when the first main relay and the second main relay being at turned-on states are turned off.

According to an aspect of the embodiments of the present invention, there is provided a control method of a battery module including a battery pack, a master battery management system electrically coupled to a first main relay and a second main relay and configured to control the first main relay and the second main relay to be driven, the master battery management system including a memory configured to store stress variables of the first main relay and the second main relay, the method including: determining, via the master battery management system, when the battery pack is abnormally charged and/or discharged; and when the master battery management system determines that the battery pack is abnormally charged and/or discharged: controlling relays to sequentially turn off by sequentially turning off the first main relay and the second main relay electrically coupled to positive and negative electrodes of the battery pack, wherein a turn-off order of the first main relay and the second main relay is alternately or periodically changed.

As described above, in the battery module and the control method thereof, according to the embodiments of the present invention, a lifetime of a main relay can be increased by periodically changing the turn-off order of the main relay electrically coupled (e.g., electrically connected) between the battery pack and a load or controlling the turn-off order according to stress variable.

### BRIEF DESCRIPTION OF THE DRAWINGS

The accompanying drawings are included to provide a further understanding of the present disclosure, and are incorporated in and constitute a part of this application together with the specification. The drawings illustrate example embodiments of the present disclosure and, together with the description, serve to explain principles of the present disclosure. In the drawings:
FIG. 1 is a block diagram of a battery module, according to an example embodiment of the present invention;
FIG. 2 is a flowchart illustrating a control method of the battery module shown in FIG. 1, according to an example embodiment of the present invention;
FIG. 3 is a block diagram of a battery module, according to another example embodiment of the present invention;
FIG. 4 is a graph illustrating the relationship between a load current and a lifetime of a main relay shown in FIG. 3, according to an example embodiment of the present invention; and
FIG. 5 is a flowchart illustrating a control method of the battery module shown in FIG. 3, according to an example embodiment of the present invention.

### DETAILED DESCRIPTION

Example embodiments of the present invention will now be described more fully hereinafter with reference to the accompanying drawings; however, the present invention may be embodied in different forms and should not be construed as limited to the embodiments set forth herein. Rather, these embodiments are provided so that this disclosure will be thorough and complete, and will fully convey the scope of the disclosure to those skilled in the art.

In the drawings, the thickness of layers and regions are exaggerated for the sake of clarity. Like numbers refer to like elements throughout. As used herein, the term "and/or" includes any and all combinations of one or more of the associated listed items.

The terminology used herein is for the purpose of describing particular embodiments only and is not intended to be limiting of the invention. As used herein, the singular forms are intended to include the plural forms as well, unless the context clearly indicates otherwise. It will be further understood that the terms "include," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various members, elements, regions, layers and/or parts, these members, elements, regions, layers and/or parts should not be limited by these terms. These terms are only used to distinguish one member, element, region, layer and/or part from another member, element, region, layer and/or part. Thus, for example, a first member, element, region, layer and/or part discussed below could be termed a second member, element, region, layer and/or part without departing from the teachings of the present invention.

In addition, the term "relay" used herein refers to an electromagnetic relay, and examples thereof may include a DC electromagnetic relay, an AC electromagnetic relay, a magnetic-latching relay, a polarized relay, a reed relay, and so on. Further, the term "relay" used herein encompasses devices capable of controlling relatively large electric signals using relatively small electric signals. However, the present invention does not limit the type of the relay to those listed herein, and any other suitable type of relay may be used in the embodiments of the present invention.

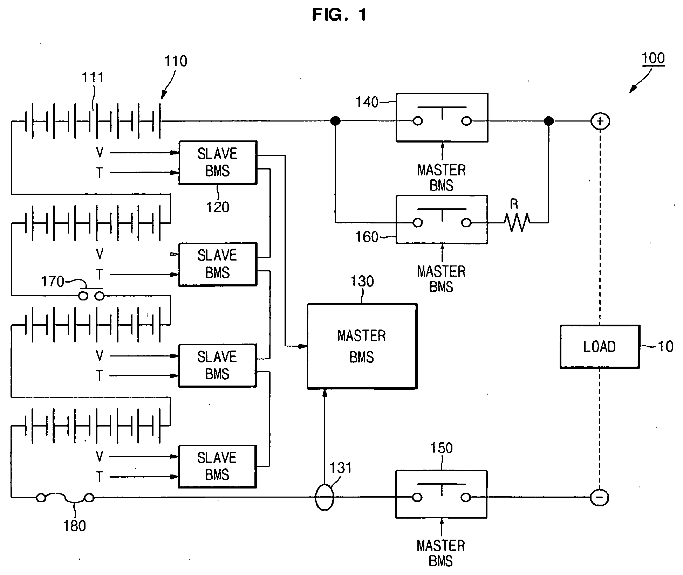

FIG. 1 is a block diagram of a battery module, according to an example embodiment of the present invention.

As shown in FIG. 1, the battery module 100 includes a plurality of battery packs 110, a master battery management system (BMS) 130, a first main relay 140 and a second main relay 150. In addition, the battery module 100 according to the example embodiment of the present invention may further include a plurality of slave BMS's 120, a sub relay 160, a safety switch 170 and a safety fuse 180. A load 10 may be electrically coupled (e.g., electrically connected) between a positive electrode (+) terminal and a negative electrode (-) terminal of the battery module 100. When the battery module 100 is mounted in an electric vehicle or a hybrid vehicle, the load 10 may be an inverter for charging and discharging the battery pack 110. When a vehicle decelerates, the inverter may be electrically coupled between the positive electrode (+) terminal and the negative electrode (-) terminal of the battery module 100 to perform bidirectional operations for charging the battery pack 110 using the power generated by a driving force of a motor generator, and transmitting the power of the battery pack 110 to the motor generator that is a power source of the vehicle.

Each of the plurality of battery packs 110 may include a plurality of battery cells 111. The battery cells 111 may be electrically coupled to each other in series and/or in parallel. The plurality of battery packs 110 may also be electrically coupled to each other in series and/or in parallel. The battery cells 111 may be ones selected from the group consisting of lithium ion batteries, lithium polymer batteries and equivalents thereof, but embodiment of the present invention are not limited thereto. In addition to the battery pack 110, fuel cells, solar cells or wind power generators may also be used in embodiments of the present invention.

Each of the plurality of slave BMS's 120 is electrically coupled to a corresponding battery pack 110, senses voltages and/or temperatures of the battery pack 110 and manages charging, discharging and/or cell balancing of the battery pack 110. Each of the slave BMS's 120 manages one battery pack 110. The slave BMS's 120 may be electrically coupled to each other via a controller area network (CAN) interface, but embodiments of the present invention are not limited thereto. For example, the slave BMS's 120 may be electrically coupled to each other through a serial communication interface, such as RS232, RS422 or IEEE1394.

The master BMS 130 is electrically coupled to the slave BMS's 120 and manages the overall charging, discharging and/or pack balancing of the battery pack 110 using the voltages and/or temperatures of the battery pack 110 transmitted from the respective slave BMS's 120. In addition, the master BMS 130 further includes a current sensor 131, and manages the battery pack 110 using current values obtained from the current sensor 131 so as not to input over-current to the battery pack 110 and not to output over-current from the battery pack 110. Further, the master BMS 130 directly controls turn-on and/or turn-off states of the first main relay 140, the second main relay 150 and the sub relay 160.

The current sensor 131, which is electrically coupled between the battery pack 110 and the load, senses the current input to (charged in) the battery pack 110 and/or the current output from (discharged from) the battery pack 110, and transmits the sensed current to the master BMS 130. The current sensor 131 may be one selected from the group consisting of a hall sensor, a shunt resistor, and equivalents thereof, but embodiments of the present invention are not limited thereto.

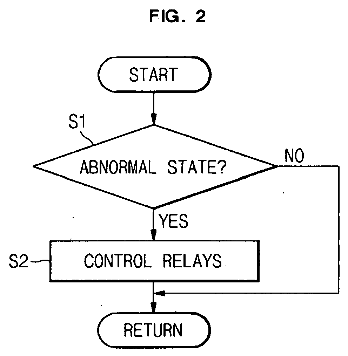

A battery module control method of the master BMS 130 for controlling the first main relay 140 and the second main relay 150 is shown in FIG. 2. Hereinafter, the method of the master BMS 130 controlling the first main relay 140 and the second main relay 150 in an abnormal state will be described with reference to FIGS. 1 and 2.

First, the master BMS 130 determines whether or not the battery pack 110 is in an abnormal state, such as over-charge, over-discharge and/or over-current (S1). when the master BMS 130 determines that the battery pack 110 is in the abnormal state, the first main relay 140 and the second main relay 150 are controlled to electrically disconnect the battery pack 110 from the load (S2). For example, to electrically disconnect the battery pack 110 from the load, the master BMS 130 sequentially turns off the first main relay 140 and the second main relay 150. The master BMS 130 may control each of the first main relay 140 and the second main relay 150 to be alternately (and, e.g., periodically) turned off.

For example, in a state where the electrically coupled battery pack 110 and load 10 are electrically decoupled (e.g., electrically disconnected) from each other, the master BMS 130 first turns off the first main relay 140 and then turns off the second main relay 150. Therefore, after the flow of current is cut off by turning off the first main relay 140 in a current flowing state, the second main relay 150 is turned off. In such a manner, when the second main relay 150 is turned off after the first main relay 140 is turned off in the current flowing state, the stress may be concentrated (or be placed on) on the first main relay 140.

Thereafter, when the electrically coupled battery pack 110 and load 10 are to be electrically decoupled, the master BMS 130 first turns off the second main relay 150 and then turns off the first main relay 140. Therefore, after the flow of current is cut off by turning off the second main relay 150 in a current flowing state, the first main relay 140 is turned off. In such a manner, when the first main relay 140 is turned off after the second main relay 150 is turned off in the current flowing state, the stress may be concentrated on (or be placed on) the second main relay 150. Therefore, when the first main relay 140 and the second main relay 150 are to be turned off in a current flowing state, the master BMS 130 controls the first main relay 140 and the second main relay 150 to be alternately turned off first. As described above, the master BMS 130 controls the turn-off order of the first main relay 140 and the second main relay 150, thereby preventing stress from being concentrated on one main relay and distributing (or dispersing) the stress onto two main relays 140 and 150.

In addition, the master BMS 130 may control the turn-off order of the first main relay 140 and the second main relay 150 to be periodically changed. For example, when the master BMS 130 first turns off the first main relay 140 twice in a current flowing state, it may then turn off the second main relay 150 twice in the current flowing state, thereby preventing the stress from concentrating on one main relay.

When the first main relay 140 and the second main relay 150 are relays having the same capacity, the master BMS 130 controls the number of times that the first main relay 140 and the second main relay 150 are turned off first to be equal to each other. Here, the relays having the same capacity may refer to relays having the same estimated life (e.g., measured in switching cycles) for the same load current.

The estimated life may refer to the number of times the relay (e.g., the main relay) is turned off. Here, current may flow through the relay (e.g., main relay) during a turned-on state.

That is to say, the master BMS 130 controls the main relays 140 and 150 to alternately (and e.g., periodically) change the turn-off order of the first main relay 140 and the second main relay 150 (S2).

The first main relay 140 is electrically coupled between the positive electrode of the battery pack 110 and the load 10. The first main relay 140 is maintained at a turn-on state when the battery pack 110 is in a normal state (e.g., a normal operation state), but is turned off when the battery pack 110 is in an abnormal state, such as over-charge, over-discharged and/or over-current of the battery pack 110. To this end, the first main relay 140 is turned on and/off by a control signal of the master BMS 130.

The second main relay 150 is electrically coupled between the negative electrode of the battery pack 110 and the load 10. The second main relay 150 is maintained at a turn-on state when the battery pack 110 is in a normal state, but is turned off when the battery pack 110 is in an abnormal state, such as over-charge, over-discharged and/or over-current of the battery pack 110. To this end, the second main relay 150 is turned on and/off by a control signal of the master BMS 130.

The sub relay 160 is electrically coupled to the first main relay 140 in parallel. The sub relay 160 is electrically coupled to the resistor R in series. As such, the sub relay 160 and the resistor R, which are electrically coupled in series, are electrically coupled to the first main relay 140 in parallel. The sub relay 160 may alternatively be electrically coupled to the second main relay 150 in parallel. When the battery module 100 is in a normal state, the sub relay 160 is maintained at a turn-off state, but may be maintained at a turn-on state for reserved charge and discharge in a state where the battery pack 110 is over-discharged or over-charged.. The sub replay 160 may also be turned on and/or off by the control signal of the master BMS 130.

The safety switch 170 is electrically coupled between the battery packs 110 and may be turned off by an operator when a failure of the battery module 100 is repaired or examined. Therefore, when the safety switch 170 is turned off for repairing or examining the failure of the battery module 100, it is possible to prevent the operator from being subjected to a danger of being exposed to high current.

The safety fuse 180, which is electrically coupled between the battery pack 110 and the load 10 (e.g. an inverter), cuts off the flow of current by being melted when over-current that exceeds a current level (e.g., a reference current level) flows, thereby preventing the battery module 100 from being damaged.

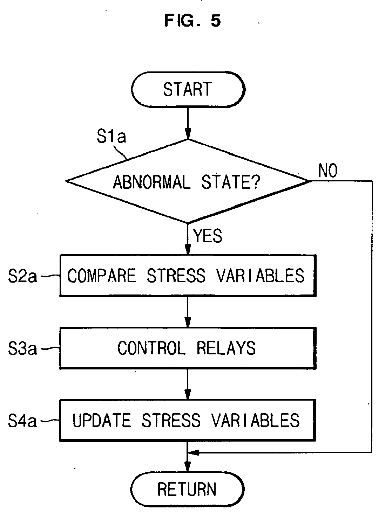

It is also possible to control the first main relay 140 and the second main relay 150 according to stress variables. A corresponding flowchart is depicted in Fig. 5.

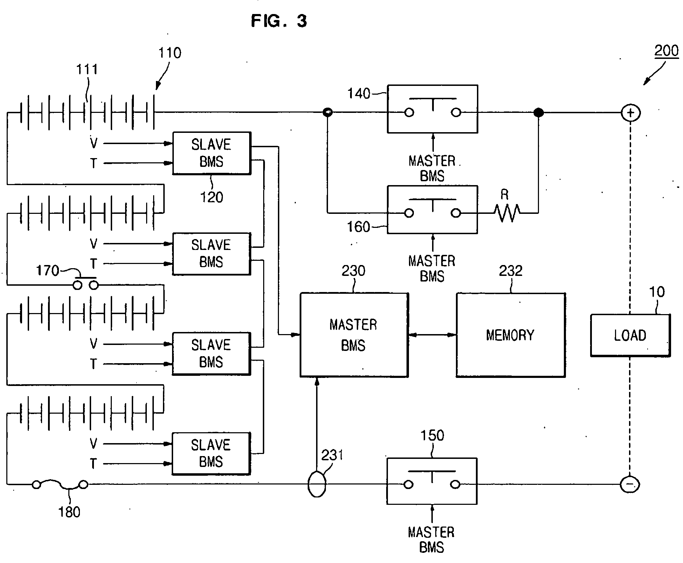

FIG. 3 is a block diagram of a battery module, according to another embodiment of the present invention.

As shown in FIG. 3, the battery module 200 includes a plurality of battery packs 110, a plurality of slave BMS's 120, a master battery management system (BMS) 230, a first main relay 140, a second main relay 150, a sub relay 160, a safety switch 170 and a safety fuse 180. In the battery module 200, the plurality of battery packs 110, the plurality of slave BMS's 120, the first main relay 140, the second main relay 150, the sub relay 160, the safety switch 170 and the safety fuse 180 have substantially the same configurations as those of the battery module 100 shown in FIG. 1. Therefore, the following description of the battery module 200, according to the illustrated embodiment of the present invention, will focus on the master BMS 230, which is different from the battery module 100 shown in FIG. 1.

The master BMS 230 is electrically coupled to the slave BMS's 120, and manages the overall charging, discharging and/or pack balancing of a plurality of battery packs 110 using the voltages and/or temperatures of all of the battery packs 110 transmitted from the respective slave BMS's 120. In addition, the master BMS 230 further includes a current sensor 231, and manages the battery packs 110 using current values obtained from the current sensor 231 so as not to input over-current to the battery packs 110 and not to output over-current from the battery packs 110. Further, the master BMS 230 directly controls turn-on and/or turn-off states of the first main relay 140, the second main relay 150 and the sub relay 160.

The current sensor 231, which is electrically coupled between the battery packs 110 and the load 10, senses the current input to (charged in) the battery packs 110 and/or the current output from (discharged from) the battery packs 110, and transmits the sensed current to the master BMS 230. The current sensor 231 may be one selected from the group consisting of a hall sensor, a shunt resistor and equivalents thereof, but embodiments of the present invention are not limited thereto.

In addition, the master BMS 230 further includes a memory 232, which stores the stress variables of the first main relay 140 and the second main relay 150. In one embodiment, the master BMS 230 directly controls the first main relay 140 and the second main relay 150 according to magnitudes of stress variables of the first main relay 140 and the second main relay 150 obtained from the memory 232.

The stress variable refers to the number of times a relay (e.g., the first main relay 140 and the second main relay 150) is turned off in a current flowing state relative to its estimated life (e.g., measured in switching cycles). The estimated life means the number of times the main relay may be turned off. Here, the current flows through the main relay in a turned-on state.

For example, the master BMS 230 controls the turn-off driving order of the first main relay 140 and the second main relay 150 according to the stress variables of the first main relay 140 and the second main relay 150 obtained from the memory 232. In the event that the first main relay 140 and the second main relay 150 are to be turned off in a current flowing state, the master BMS 230 first turns off one of the first main relay 140 and the second main relay 150, which has a smaller stress variable, and then turns off the other main relay. In an embodiment where the first main relay 140 and the second main relay 150 have the same stress variable, the master BMS 230 may first turn off the first main relay 140, but embodiments of the present invention are not limited thereto.

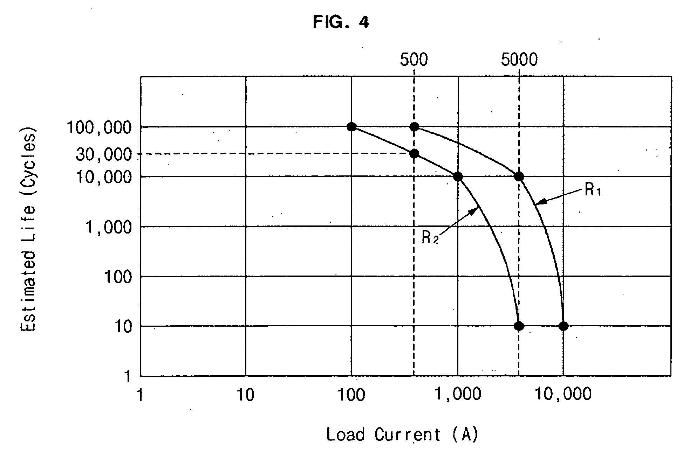

FIG. 4 is a graph illustrating the relationship between a load current and a lifetime of a main relay shown in FIG. 3, according to an example embodiment of the present invention. Here, the X axis indicates load current and the Y axis indicates estimated life (e.g., measured in switching cycles). The load current may refer to a current flowing between the battery packs 110 and the load 10 when the battery packs 110 are charged or discharged. As shown in FIG. 4, even for relays having the same capacity, the higher the load current, the smaller the estimated life, and vice versa. In addition, even when the same load current flows through the relays, the stress variables of the relays may be different according to the estimated life.

For example, as shown in FIG. 4, assuming the first main relay 140 is a relay (R1) having a first estimated life, when the first main relay 140 is turned off once in a state in which the current of 500A flows, the estimated life is 100000 and the stress variable is 1/100000. Further, assuming that the second main relay 150 is a relay (R2) having a second estimated life, when the second main relay 150 is turned off once in a state in which the current of 500A flows, the estimated life is 30000 and the stress variable is 1/30000.

When the first main relay 140 and the second main relay 150 are turned off in a current flowing state, the master BMS 230 calculates the stress variable, cumulatively increments (or increases) the stress variables read from the memory 232 and stores the stress variables again in the memory 232.

FIG. 5 is a flowchart illustrating a control method of the battery module shown in FIG. 3, according to an example embodiment of the present invention.

The battery module control method of the master BMS 230 controlling the first main relay 140 and the second main relay 150 is shown in FIG. 5. Hereinafter, the method of the master BMS 230 controlling the first main relay 140 and the second main relay 150 in an abnormal state will be described with reference to FIGS. 1 and 5.

In Step S1 a, the master BMS 230 determines whether or not the battery packs 110 are in an abnormal state, such as over-charge, over-discharge and/or over-current. When the master BMS 230 determines that the battery packs 110 is in the abnormal state, in step S2a, the master BMS 230 compares the stress variables of the first main relay 140 and the second main relay 150 read from the memory 232.

In step S3a, the master BMS 230 sets and controls the turn-off driving order of the first main relay 140 and the second main relay 150 according to the stress variables of the first main relay 140 and the second main relay 150. For example, the master BMS 230 first turns off one of the first main relay 140 and the second main relay 150, which has the smaller stress variable and then turns off the other main relay.

In step S4a, the master BMS 230 cumulatively increases the stress variable of the first turned-off main relay read from the memory 232 and then stores the same again in the memory 232. As such, when the first main relay 140 and the second main relay 150 are turned off in a current flowing state, the master BMS 230 re-obtains the stress variable stored in the memory 232 and updates the same.

As described above, when the master BMS 230 is driven in an abnormal state, one of the first main relay 140 and the second main relay 150 having the smaller stress variable is driven first, thereby preventing the stress from concentrating on one main relay. In addition, whenever the main relays 140 and 150 are turned off in a current flowing state, the master BMS 230 updates the stress variables stored in the memory 232, thereby controlling the main relays 140 and 150 according to the cumulatively increasing stress variables.

## Claims

1. A battery module (100; 200) comprising:
a battery pack (110) comprising positive and negative electrodes;
a first main relay (140) and a second main relay (150) electrically coupled to the positive and negative electrodes of the battery pack (110); and
a master battery management system (130; 230) electrically coupled to the first main relay (140) and the second main relay (150) and configured to control the first main relay (140) and the second main relay (150) to be driven,
wherein the master battery management system (130; 230) is configured to control a turn-off order of the first main relay (140) and the second main relay (150) according to stress variables of the first main relay (140) and the second main relay (150),
**characterized in that**
the master battery management system (130; 230) is configured to selectively and sequentially turn off the first main relay (140) and the second main relay (150), wherein the main relay having a smaller stress variable is first turned off and the other main relay is then turned off.

2. The battery module as claimed in claim 1, wherein the master battery management system (230) comprises a memory (232) configured to store the stress variables of the first main relay (140) and the second main relay (150).

3. The battery module as claimed in claim 2, wherein the master battery management system (230) is configured to obtain from the memory (232), and cumulatively increase, the stress variable of the first turned-off main relay (140).

4. The battery module as claimed in one of the preceeding claims, further comprising a sub relay (160) electrically coupled to the first main relay (140) in parallel.

5. The battery module as claimed in claim 4, further comprising a resistor (R) electrically coupled to the sub relay (160) in series.

6. The battery module as claimed in one of the preceeding claims, wherein the master battery management system (130; 230) comprises a current sensor (131) configured to sense an input current or an output current of the battery pack.

7. A control method of a battery module (100; 200) comprising a battery pack (110), a master battery management system (130; 230) electrically coupled to a first main relay (140) and a second main relay (150) and configured to control the first main relay (140) and the second main relay (150) to be driven, the method comprising:
determining, via the master battery management system (130; 230), when the battery pack (110) is abnormally charged and/or discharged;
when the master battery management system (130; 230) determines that the battery pack (110) is abnormally charged and/or discharged:
receiving stress variables of the first main relay (140) and the second main relay (150) and comparing the received stress variables; and
controlling the relays (140, 150), via the master battery management system (130; 230), to sequentially turn off the first main relay (140) and the second main relay (150) according to magnitudes of the stress variables of the first main relay (140) and the second main relay (150), wherein the main relay having a smaller stress variable is first tuned off and the other main relay is then turned off.

8. The control method as claimed in claim 7, wherein the master battery management system (230) comprising a memory (232) configured to store stress variables of the first main relay (140) and the second main relay (150).

9. The control method as claimed in one of claims 7 to 9, further comprising obtaining and cumulatively increasing the stress variables of the main relay first turned off by the master battery management system (130; 230) and storing the stress variables.

10. The control method as claimed in one of claims 7 to 10, wherein each of the stress variables corresponding to one of the first main relay (140) and the second main relay (150) is a stress value relative to a number of times the corresponding one of the first main relay (140) and the second main relay (150) is capable of being turned off.

## Patentansprüche

1. Batteriemodul (100; 200), aufweisend:
einen Batteriepack (110), aufweisend eine positive und eine negative Elektrode;
ein erstes Hauptrelais (140) und ein zweites Hauptrelais (150), die mit der positiven und der negativen Elektrode des Batteriepacks (110) elektrisch gekoppelt sind; und
ein übergeordnetes Batterieverwaltungssystem (130; 230), das mit dem ersten Hauptrelais (140) und dem zweiten Hauptrelais (150) elektrisch gekoppelt ist und konfiguriert ist, um das erste Hauptrelais (140) und das zweite Hauptrelais (150) zu steuern, so dass sie angesteuert werden,
wobei das übergeordnete Batterieverwaltungssystem (130; 230) konfiguriert ist, um eine Abschaltreihenfolge des ersten Hauptrelais (140) und des zweiten Hauptrelais (150) gemäß Belastungsvariablen des ersten Hauptrelais (140) und des zweiten Hauptrelais (150) zu steuern,
**dadurch gekennzeichnet, dass**
das übergeordnete Batterieverwaltungssystem (130; 230) konfiguriert ist, um das erste Hauptrelais (140) und das zweite Hauptrelais (150) wahlweise und sequenziell abzuschalten, wobei das Hauptrelais, das eine kleinere Belastungsvariable aufweist, zuerst abgeschaltet wird und das andere Hauptrelais danach abgeschaltet wird.

2. Batteriemodul nach Anspruch 1, wobei das übergeordnete Batterieverwaltungssystem (230) einen Speicher (232), der konfiguriert ist, um die Belastungsvariablen des ersten Hauptrelais (140) und des zweiten Hauptrelais (150) zu speichern, aufweist.

3. Batteriemodul nach Anspruch 2, wobei das übergeordnete Batterieverwaltungssystem (230) konfiguriert ist, um vom Speicher (232) die Belastungsvariable des ersten abgeschalteten Hauptrelais (140) zu erhalten und kumulativ zu erhöhen.

4. Batteriemodul nach einem der vorhergehenden Ansprüche, ferner aufweisend ein Unterrelais (160), das mit dem ersten Hauptrelais (140) elektrisch parallel geschaltet ist.

5. Batteriemodul nach Anspruch 4, ferner aufweisend einen Widerstand (R), der mit dem Unterrelais (160) elektrisch in Reihe geschaltet ist.

6. Batteriemodul nach einem der vorhergehenden Ansprüche, wobei das übergeordnete Batterieverwaltungssystem (130; 230) einen Stromwiderstand (131), der konfiguriert ist, um einen Eingangsstrom oder einen Ausgangsstrom des Batteriepacks zu erkennen, aufweist.

7. Verfahren zum Steuern eines Batteriemoduls (100; 200), aufweisend einen Batteriepack (110), ein übergeordnetes Batterieverwaltungssystem (130; 230), das mit einem ersten Hauptrelais (140) und einem zweiten Hauptrelais (150) elektrisch gekoppelt ist und konfiguriert ist, um das erste Hauptrelais (140) und das zweite Hauptrelais (150) zu steuern, so dass sie angesteuert werden, wobei das Verfahren aufweist:
über das übergeordnete Batterieverwaltungssystem (130; 230) Bestimmen, wenn der Batteriepack (110) anormal geladen und/oder entladen wird;
wenn das übergeordnete Batterieverwaltungssystem (130; 230) bestimmt, dass der Batteriepack (110) anormal geladen und/oder entladen wird:
Erhalten von Belastungsvariablen des ersten Hauptrelais (140) und des zweiten Hauptrelais (150) und Vergleichen der erhaltenen Belastungsvariablen; und
Steuern der Relais (140, 150) über das übergeordnete Batterieverwaltungssystem (130; 230), um das erste Hauptrelais (140) und das zweite Hauptrelais (150) gemäß Größen der Belastungsvariablen des ersten Hauptrelais (140) und des zweiten Hauptrelais (150) sequenziell abzuschalten, wobei das Hauptrelais, das einen kleineren Belastungswert aufweist, zuerst abgeschaltet wird und das andere Hauptrelais danach abgeschaltet wird.

8. Steuerverfahren nach Anspruch 7, wobei das übergeordnete Batterieverwaltungssystem (230) einen Speicher (232), der konfiguriert ist, um Belastungsvariablen des ersten Hauptrelais (140) und des zweiten Hauptrelais (150) zu speichern, aufweist.

9. Steuerverfahren nach einem der Ansprüche 7 oder 8, ferner aufweisend Erhalten und kumulatives Erhöhen der Belastungsvariablen des Hauptrelais, das vom übergeordneten Batterieverwaltungssystem (130; 230) zuerst abgeschaltet wird, und Speichern der Belastungsvariablen.

10. Steuerverfahren nach einem der Ansprüche 7 bis 9, wobei jede der Belastungsvariablen, die einem des ersten Hauptrelais (140) und des zweiten Hauptrelais (150) entspricht, ein Belastungswert relativ zu einer Anzahl von Malen, die das entsprechende des ersten Hauptrelais (140) und des zweiten Hauptrelais (150) abgeschaltet werden kann, ist.

## Revendications

1. Module de batterie (100 ; 200) comprenant :
un bloc-batterie (110) comprenant des électrodes positive et négative ;
un premier relais principal (140) et un deuxième relais principal (150) électriquement couplés aux électrodes positive et négative du bloc-batterie (110) ; et
un système de gestion de batterie maître (130 ; 230) électriquement couplé au premier relais principal (140) et au deuxième relais principal (150) et configuré pour commander le premier relais principal (140) et le deuxième relais principal (150) à entraîner,
dans lequel le système de gestion de batterie maître (130 ; 230) est configuré pour commander un ordre de désactivation du premier relais principal (140) et du deuxième relais principal (150) selon des variables de contrainte du premier relais principal (140) et du deuxième relais principal (150),
**caractérisé en ce que** :
le système de gestion de batterie maître (130 ; 230) est configuré pour désactiver sélectivement et séquentiellement le premier relais principal (140) et le deuxième relais principal (150), le relais principal ayant une variable de contrainte plus petite étant désactivé en premier et l'autre relais principal étant ensuite désactivé.

2. Module de batterie tel que revendiqué dans la revendication 1, dans lequel le système de gestion de batterie maître (230) comprend une mémoire (232) configurée pour stocker les variables de contrainte du premier relais principal (140) et du deuxième relais principal (150).

3. Module de batterie tel que revendiqué dans la revendication 2, dans lequel le système de gestion de batterie maître (230) est configuré pour obtenir à partir de la mémoire (232), et pour augmenter cumulativement, la variable de contrainte du premier relais principal (140) désactivé.

4. Module de batterie tel que revendiqué dans l'une des revendications précédentes, comprenant en outre un sous-relais (160) électriquement couplé au premier relais principal (140) en parallèle.

5. Module de batterie tel que revendiqué dans la revendication 4, comprenant en outre une résistance (R) électriquement couplée au sous-relais (160) en série.

6. Module de batterie tel que revendiqué dans l'une des revendications précédentes, dans lequel le système de gestion de batterie maître (130 ; 230) comprend un capteur de courant (131) configuré pour détecter un courant d'entrée ou un courant de sortie du bloc-batterie.

7. Procédé de commande d'un module de batterie (100 ; 200) comprenant un bloc-batterie (110), un système de gestion de batterie maître (130 ; 230) électriquement couplé à un premier relais principal (140) et à un deuxième relais principal (150) et configuré pour commander le premier relais principal (140) et le deuxième relais principal (150) à entraîner, le procédé comprenant le fait :
de déterminer, par l'intermédiaire du système de gestion de batterie maître (130 ; 230), quand le bloc-batterie (110) est chargé et/ou déchargé de manière anormale ;
lorsque le système de gestion de batterie maître (130 ; 230) détermine que le bloc-batterie (110) est chargé et/ou déchargé de manière anormale :
de recevoir des variables de contrainte du premier relais principal (140) et du deuxième relais principal (150) et de comparer les variables de contrainte reçues ; et
de commander les relais (140, 150), par l'intermédiaire du système de gestion de batterie maître (130 ; 230), pour désactiver séquentiellement le premier relais principal (140) et le deuxième relais principal (150) selon les amplitudes des variables de contrainte du premier relais principal (140) et du deuxième relais principal (150), où le relais principal ayant une valeur de contrainte plus petite est désactivé en premier et l'autre relais principal est ensuite désactivé.

8. Procédé de commande tel que revendiqué dans la revendication 7, dans lequel le système de gestion de batterie maître (230) comprenant une mémoire (232) configurée pour stocker des variables de contrainte du premier relais principal (140) et du deuxième relais principal (150).

9. Procédé de commande tel que revendiqué dans l'une des revendications 7 ou 8, comprenant en outre le fait d'obtenir et d'augmenter cumulativement les variables de contrainte du relais principal désactivé en premier par le système de gestion de batterie maître (130 ; 230) et de stocker les variables de contrainte.

10. Procédé de commande tel que revendiqué dans l'une des revendications 7 à 9, dans lequel chacune des variables de contrainte correspondant à l'un du premier relais principal (140) et du deuxième relais principal (150) est une valeur de contrainte par rapport à un nombre de fois où le relais correspondant parmi le premier relais principal (140) et le deuxième relais principal (150) est susceptible d'être désactivé.
